# EUROPÄISCHE PATENTSCHRIFT

(11) **EP 2 265 442 B1**
(45) Veröffentlichungstag und Bekanntmachung des Hinweises auf die Patenterteilung: **30.05.2012**
(21) Anmeldenummer: 09736024.2
(22) Anmeldetag: 16.01.2009
(51) Int. Cl.: B32B 37/12, B32B 37/06, B32B 3/12, B32B 7/12, A47B 96/20

(54) **VERFAHREN ZUR HERSTELLUNG EINER LEICHTBAUPLATTE FÜR DEN MÖBELBAU**
METHOD FOR THE PRODUCTION OF A LIGHTWEIGHT BUILDING PANEL FOR FURNITURE CONSTRUCTION
PROCÉDÉ POUR PRODUIRE UN PANNEAU LÉGER POUR LA FABRICATION DE MEUBLES

(30) Priorität: 25.04.2008 DE 102008020976
(43) Veröffentlichungstag der Anmeldung: 29.12.2010
(73) Patentinhaber: Fritz Egger GmbH & Co. OG, 3105 Unterradlberg (AT)
(72) Erfinder: GEYER, Andreas, A-3500 Krems An Der Donau (AT)
(74) Vertreter: Cohausz & Florack
(86) Internationale Anmeldenummer: PCT/EP2009/050473
(87) Internationale Veröffentlichungsnummer: WO 2009/130060

(56) Entgegenhaltungen:
- EP-A- 0 274 789
- EP-A- 0 512 646
- EP-A- 0 527 109
- EP-A- 1 023 955
- WO-A-2004/098884
- JP-A- 54 099 172
- US-A- 4 186 044
- US-A1- 2004 126 537

## Beschreibung

Die Erfindung betrifft ein Verfahren zur Herstellung einer Leichtbauplatte für den Möbelbau, die mindestens eine Decklage und eine damit zu verklebende Mittellage mit einer Wabenstruktur aufweist.

Verfahren und Leichtbauplatten für den Möbelbau sind aus dem Stand der Technik hinlänglich bekannt. Diese mehrschichtig aufgebauten Platten weisen in der Regel eine obere und eine untere Decklage, auch als Deckplatte bezeichnet, und einen dazwischenliegenden Kern, die sogenannte Mittellage, aus einem leichten Material auf. Leicht bedeutet, dass die Dichte bzw. das Gewicht der Mittellage deutlich geringer als bei den Decklagen ist. Für die Decklagen können Holzwerkstoffplatten wie Sperrholzplatten, Spanplatten, Faserplatten - beispielsweise HDF- oder MDF-Platten - oder OSB-Platten, vorzugsweise in einer Stärke von etwa 2 bis 12 mm herangezogen werden. Für die leichte Mittellage können geschäumte Materialien oder Wabenmaterialien, insbesondere aus Papier, Pappe, Karton, etc., verwendet werden. Zur Herstellung der Waben des besagten Wabenmaterials werden beispielsweise Streifen mit einer Breite, die anschliessend der Stärke der leichten Mittellage entspricht, abschnittweise und versetzt gegeneneinander verklebt, so dass durch anschließendes Strecken eine Struktur aus sechseckigen, aneinandergrenzenden Zellen entsteht, eben eine sogenannte Wabenstruktur. Als Wabenstruktur wird auch eine mit Löchern bzw. Bohrungen versehene Platte verstanden, wobei die Bohrungen die Wabenkammern bilden. Auch letztere Platte hat eine geringere Dichte bzw. ein geringeres Gewicht als eine gleich große Decklage.

Unterschieden wird im Möbelbau grundsätzlich zwischen Platten mit Rahmen und rahmenlosen Leichtbauplatten. Bei der Herstellung von Platten mit einem Rahmen werden in der Regel auf das herzustellende Plattenformat abgestimmte Rahmenleisten auf eine vorformatierte untere Decklage geklebt, danach wird in den entstandenen Zwischenraum die Mittellage in Form einer Wabe - zumeist aus einem Kartonmaterial - eingelegt, woraufhin dann die obere Decklage aufgeklebt wird.

Bei rahmenlosen Leichtbauplatten wird lediglich ein Wabenkern als Mittellage mit der oberen und unteren Decklage verklebt. Das gewünschte Format wird erst anschließend aus der bevorzugt zunächst großformatig hergestellten Platte gesägt. Der Bereich der Schnittkanten kann dann nachträglich beispielsweise mit Riegeln oder Kantenprofilen aus Holz, Holzwerkstoff, Kunststoff oder Laminat oder Kombinationen daraus versehen werden.

Da Quer- und Schubkräfte bei, insbesondere rahmenlosen, Leichtbauplatten nur über den flächigen Verbund zwischen Decklagen und Wabenstruktur abgetragen werden können, kommt hier der Verklebung zwischen Wabenstruktur und Decklagen besondere Bedeutung zu.

Um jedoch auf wirtschaftliche Weise rahmenlose Leichtbauplatten für den Möbelbau herstellen zu können, werden für diese Verklebung sehr rasch abbindende Klebstoffe verwendet, da sich ansonsten lange Presszeiten und ein entsprechend geringer Durchsatz ergeben würden. Es sind daher für die Verklebung zwischen Deckplatten und Wabenstruktur oft Klebstoffe auf Polyurethanharz-Basis, sogenannte PU-Kleber, oder verschiedene Schmelzklebersysteme in Verwendung. Besonders geeignet sind Zweikomponenten-Polyurethanklebersysteme, sogenannte 2K-PU-Kleber, da diese besonders rasch zum Aushärten gebracht werden können. Diese sind jedoch in der Anschaffung relativ teuer, weswegen deren effizienter Einsatz von besonderer Bedeutung ist.

Außerdem sind die genannten PU- und Schmelzklebstoffe schwierig zu verarbeiten, da sie beinahe an allen Oberflächen haften bleiben. Es ist deshalb schwierig, diese zu applizieren, ein Walzenauftrag oder Gießen ist aufgrund der hohen Reaktivität und der damit verbundenen raschen Aushärtung beispielsweise kaum möglich. Verfahren mit Schleudertellern bewirken einen hohen Reinigungsaufwand im Bereich der angrenzenden Maschinen- und Anlageteile. Auch ist damit eine regelmäßige Verteilung des Klebstoffes nur unbefriedigend möglich.

Hinzu kommt, dass die besagten Klebstoffe nur eine begrenzte offene und geschlossene Zeit haben und daher rasch verarbeitet werden müssen. Ein unvorhergesehener Stillstand in der Presse, in der die mit Kleber versehenen Deck- und Mittellagen zusammengeführt werden, kann dazu führen, dass bereits mit Klebstoff versehene Elemente ausgeschieden werden müssen, weil sie nicht innerhalb der vorgeschriebenen offenen oder geschlossenen Zeit - je nachdem, ob bereits gefügt wurde oder nicht - verpresst werden können.

Aus der EP 1 382 652 B1 ist es bei Sandwich-Elementen aus Metall für den Flugzeugbau bekannt, einen wabenförmigen Kern mit einer Klebefolie aus Schmelzklebstoff zu versehen, den Schmelzklebstoff durch die von einer Heizspirale, insbesondere einem Heißluftgebläse, abgestrahlte Wärme zu verflüssigen und schließlich die mit dem verflüssigten Klebstoff versehene Mittellage mit einer Decklage zu verbinden. Dieses Verfahren bedeutet aber einen relativ hohen maschinellen Aufwand, da hier eine zusätzliche Schicht in Form der Klebefolie vorzuhalten und zu applizieren ist. Der Aufwand wird weiter dadurch erhöht, dass das Heißluftgebläse vorgesehen werden muss, um die Klebefolie vor dem Zusammenführen von Deck- und Mittellage zu verflüssigen. Im übrigen ist dieses Verfahren für Leichtbauplatten der zuvor beschriebenen Art nicht geeignet, da die empfindlichen Zellulosematerial enthaltenden Wabenstrukturen im Unterschied zu Metallwaben durch den hohen Hitzeeintrag über das Heißluftgebläse beschädigt oder verformt werden würden.

US 4 186 044 A offenbart ein Verfahren zur Herstellung einer Leichtbauplatte, die mindestens eine Decklage und eine damit zu verklebende Mittellage mit einer Wabenstruktur aufweist, bei dem die folgenden Schritte durchgeführt werden:
- Herstellen eines Schichtaufbaus aus der mindestens einen Decklage, der Mittellage und einer Klebstoff enthaltenden Klebefolie, wobei die Klebefolie zwischen jeweiliger Decklage und Mittellage angeordnet wird,
- Erzeugen eines elektromagnetischen Feldes, wobei der Schichtaufbau dem elektromagnetischen Feld ausgesetzt wird,
- Fixieren des Schichtaufbaus, wobei sich der Klebstoff zumindest teilweise verfestigt.

Auch sind Harnstoffharzleime bekannt, um Leichtbauplatten der erfindungsgemäßen Art herzustellen. Diese härten duroplastisch aus und bringen sehr hohe Festigkeitswerte. Zur Aushärtung wird eine saure Härterkomponente benötigt.

Die Harnstoffharzleime können zwar einfacher verarbeitet werden als die genannten PU- und Schmelzklebstoffe. Es ist aber dennoch schwierig, diese nur auf den Kanten der Wabenstege zu applizieren. Werden diese vollflächig auf die Decklage aufgebracht, wird nachteilhaft unnötig viel Klebstoff verbraucht.

Durch die erforderliche Zugabe eines Härters werden außerdem vom ausgehärteten Klebstoff saure Komponenten abgegeben, die ihrerseits eine schleichende Schädigung der Wabenstruktur, insbesondere wenn es sich um eine Pappwabe handelt, hervorrufen können.

Soll aus genanntem Grund der Einsatz des Härters reduziert werden, muss eine erhöhte Temperatur zum Abbinden dieser Klebstoffe bereitgestellt werden. Die erhöhte Temperatur hat wiederum nachteilhafte Auswirkungen auf die Zellulosematerial enthaltenden Deck- und Mittellagen.

Schließlich sind aus dem Stand der Technik für die Verklebung von Deck- und Mittellagen auch Dispersionsklebstoffe bekannt. Diese zählen zu den physikalisch abbindenden Systemen. Typische Vertreter sind die im Möbelbau verbreiteten Weißleime. Sie binden unter Abgabe eines Dispersionsmittels, in der Regel Wasser, ab.

Nachteilhaft an diesen Klebstoffen ist allerdings, dass die Abbindezeit relativ lang ist, weshalb eine kontinuierliche Fertigung mit diesen Klebstoffen nicht möglich ist.

Mit dem Dispergiermittel werden außerdem auch hier saure Komponenten abgegeben, die ihrerseits eine schleichende Schädigung der Wabenstruktur, insbesondere im Falle einer Pappwabe, hervorrufen können.

Mit der Abgabe des Dispergiermittels können ungewünschte Emissionen entstehen, die speziell in Bereichen, wo sich dauerhaft Personen aufhalten können, zu vermeiden sind.

Dispersionsklebstoffe sind außerdem thermoplastisch und unterliegen damit einem gewissen Kriechen. Das bedeutet, dass sie bei dauerhafter Belastung an Festigkeit verlieren, wodurch sich die damit verklebten Bauteile mit der Zeit verformen. Im schlimmsten Fall kommt es sogar zum Bruch der Klebeverbindung.

Der größte Nachteil der Harnstoffharzleime und der Dispersionsklebstoffe ist allerdings, dass sie fast immer Wasser enthalten, das die Wabenstruktur aus Zellulosematerial erweicht, zumindest aber aufquellen läßt. Damit ergeben sich unerwünschte Änderungen der Dimension oder Stauchungen beim Verpressen. Letztlich kann damit auch eine nachhaltige Abnahme der mechanischen Festigkeit der fertigen Platte hervorgerufen werden.

Es ist daher die Aufgabe der vorliegenden Erfindung, ein Verfahren anzugeben, das eine vereinfachte Herstellung von Leichtbauplatten mit einer Wabenstruktur als leichter Mittellage für den Möbelbau gewährleistet.

Die zuvor hergeleitete und aufgezeigte Aufgabe wird erfindungsgemäß gelöst durch ein Verfahren zur Herstellung einer Leichtbauplatte für den Möbelbau, die mindestens eine Decklage und eine damit zu verklebende Mittellage mit einer Wabenstruktur aufweist, bei dem die folgenden Schritte durchgeführt werden: Herstellen eines Schichtaufbaus aus der mindestens einen Decklage, der Mittellage und einer Klebstoff enthaltenden Klebefolie, wobei die Klebefolie zwischen jeweiliger Decklage und Mittellage angeordnet wird, Erzeugen eines elektromagnetischen Feldes, wobei der Schichtaufbau dem elektromagnetischen Feld ausgesetzt wird, Fixieren des Schichtaufbaus, wobei sich der Klebstoff zumindest teilweise verfestigt. Vorzugsweise wird das Fixieren des Schichtaufbaus, beispielsweise in einer Presse, durchgeführt, bevor der Schichtaufbau dem elektromagnetischen Feld ausgesetzt wird, kann aber auch erfolgen, nachdem der Schichtaufbau dem elektromagnetischen Feld ausgesetzt wurde. Beim Fixieren werden die Deck- und Mittellagen zueinander ausgerichtet, vorzugsweise bereits derart, dass ihre Lage zueinander der späteren Lage in der fertigen Leichtbauplatte entspricht.

Indem zunächst ein Schichtaufbau hergestellt wird, in den eine Klebefolie zwischen die Deck- und Mittellagen integriert wird, also eine Klebeeigenschaften erhaltende Folie, und indem der Klebstoff für einen vorbestimmten Zeitraum zu seiner Aktivierung einem elektromagnetischen Feld ausgesetzt wird, werden auf einfache Weise die Vorteile eines schnell härtenden bzw. schnell abbindenden Systems genutzt und die eingangs beschriebenen Nachteile vermieden. Dabei kann die Aktivierung jederzeit erfolgen, so dass Korrekturen am Schichtaufbau immer möglich sind.

Besonders vorteilhaft bei der erfindungsgemäßen Lösung ist, dass die zum Verflüssigen des Klebstoffs der Klebefolie erforderliche Energie präzise an die Stellen gebracht werden kann, an denen die Verklebung erfolgen soll. Die übrigen Bereiche des Schichtaufbaus brauchen von dem elektromagnetischen Feld nicht nennenswert beeinflusst werden, so dass insbesondere die Deck- und Mittellagen nicht mit erwärmt werden und folglich auch keinen Schaden nehmen können. Das kurzzeitige Verflüssigen des Klebstoffs der Klebefolie erfolgt nur an den Stellen, an denen Stege der Wabenstruktur an die jeweils benachbarte und damit zu verbindende Lage, insbesondere Decklage, stoßen.

Ein weiterer Vorteil ist, dass aufgrund des gezielten Energieeintrags zum Aktivieren des Klebstoffs, nämlich nur an die tatsächlich notwendigen Stellen im Schichtaufbau, die Verflüssigung des Klebstoffs in relativ kurzer Zeit erfolgt. Entsprechend erfolgt auch das Aushärten bzw. Abbinden in einer relativ kurzen Zeit, da die jeweils benachbarte Lage bei der Aktivierung des Klebstoffs nicht nennenswert mit erwärmt wird und auf diese Weise die Wärme vom aktivierten Klebstoff schnell abführen kann.

Gemäß einer Ausgestaltung des erfindungsgemäßen Verfahrens wird der Schichtaufbau einem elektromagnetischen Wechselfeld ausgesetzt. Wechselfelder sind in Stärke und Polung wechselnde elektrische und/oder magnetische Felder, die durch Wechselspannung bzw. Wechselstrom hervorgerufen werden. Elektrische Wechselfelder entstehen zwischen Leitern unterschiedlicher Potentiale. Besteht dabei die Isolation aus bestimmten Stoffen, deren Moleküle polarisiert sind und elektrische Dipole bilden, hier sind insbesondere Wassermoleküle zu nennen, so wechseln diese im Rhythmus der angelegten Frequenz ihre Lage, was besonders bei relativ hohen Frequenzen zu Erwärmung und Energieverlust führt, die im vorliegenden Fall die Aktivierung bzw. das Verflüssigen des Klebstoffs der Klebefolie bewirken. Magnetische Wechselfelder werden von wechselstromdurchflossenen Spulen und Leitern erzeugt. Dabei folgt das Magnetfeld zeitverzögert bzw. phasenverschoben der Höhe und Richtung der angelegten Spannung. In diesem Fall wechseln magnetische Dipole im Rhythmus der angelegten Frequenz ihre Lage, was auch hier zu Erwärmung und Energieverlusten führt, die die Aktivierung bzw. Verflüssigung des Klebstoffs hervorrufen.

Als besonders geeignet hat sich für den vorliegenden Fall die Aktivierung des Klebstoffs mittels Mikrowellen erwiesen, wobei also der Schichtaufbau einem elektromagnetischen Wechselfeld einer Frequenz von 300 MHz bis 300 GHz ausgesetzt wird. Ähnlich effektiv hat sich das Prinzip der kapazitiven Erwärmung erwiesen, bei der der Schichtaufbau einem elektromagnetischen Wechselfeld einer Frequenz von 30 kHz bis 300 MHz ausgesetzt wird. Auch eine Aktivierung durch induktive Erwärmung ist im vorliegenden Fall geeignet, wobei dann der Schichtaufbau einem magnetischen Wechselfeld einer Frequenz von 3 kHz bis 30 kHz ausgesetzt wird. Es sei dabei erwähnt, dass mit einem Feld im Sinne der Erfindung auch die elektromagnetischen Wellen, also Schwingungen des Feldes, gemeint sind.

Im Falle der Aktivierung des Klebstoffs durch Mikrowellen oder durch kapazitive Erwärmung ist es besonders vorteilhaft, wenn die Klebefolie und/oder eine benachbarte Lage, beispielsweise Mittellage oder Decklage, insbesondere vor dem Herstellen des Schichtaufbaus, befeuchtet, vorzugsweise mit Wasser benetzt, wird. Durch eine gezielte Befeuchtung der Kanten der Wabenstege gelingt es sehr effizient, genau dort, wo die Verklebung erfolgen soll, die gewünschte Erwärmung herbeizuführen. Es ist aber auch denkbar, dass die Restfeuchte in der Wabenstruktur und/oder der Decklage schon ausreicht, eine effiziente Verklebung zu gewährleisten. Im Falle der Anwendung des Prinzips der induktiven Erwärmung hat sich als vorteilhaft erwiesen, wenn die Klebefolie und/oder eine benachbarte Lage, beispielsweise Mittellage oder Decklage, insbesondere vor dem Herstellen des Schichtaufbaus, mit Partikeln und/oder einer Schicht versehen wird, die magnetische Dipole enthält. Insbesondere können Metallpartikel oder eine Metall enthaltende Schicht vorgesehen werden.

In allen vorgenannten Fällen kann der Klebstoff von dem elektromagnetischen Feld, hierunter ist auch das magnetische Wechselfeld zu verstehen, direkt oder indirekt aktiviert bzw. erwärmt werden. Eine indirekte Erwärmung der Klebefolie kann zum Beispiel dadurch erfolgen, dass angrenzende Bereiche, insbesondere die Wabenstruktur und/oder die Decklage, zumindest im Kontaktbereich durch die vorangehend beschriebenen Methoden erwärmt wird. Es könnte beispielsweise nur die Oberfläche der Decklage, die der Klebefolie zugekehrt ist, mit magnetisierbaren, also magnetische Dipole enthaltenden Partikeln versehen sein, die dann im Wege der induktiven Erwärmung Wärme an die aktivierbare Klebefolie bzw. den Klebstoff abgeben. Wie gesagt ist auch eine Befeuchtung, insbesondere mit Wasser, der der Klebefolie zugekehrten Oberfläche der jeweils benachbarten Lage denkbar. Für den Fall einer direkten Aktivierung können dann die elektrischen Dipole, beispielsweise Wassermoleküle, und/oder magnetischen Dipole, beispielsweise Metallpartikel, unmittelbar in der Klebefolie bzw. dem Klebstoff vorgesehen sein. Es sei darauf hingewiesen, dass die elektrischen Dipole nicht nur aus Wassermolekülen, sondern jeglichen geeigneten Molekülen gebildet werden können.

Die aktivierbare Klebefolie kann auf verschiedene Art und Weise gebildet werden. So ist es denkbar, dass die Klebefolie eine Heiß- oder Schmelzklebefolie ist, das heißt, dass der Heiß- oder Schmelzklebstoff selbst die Folie bildet. Es ist auch denkbar, dass als Klebefolie eine mit Heiß- oder Schmelzkleber kaschierte Folie eingesetzt wird, das heißt, eine Folie, die als Träger für eine insbesondere beidseitige Heiß- oder Schmelzkleberschicht dient. Ferner ist die Verwendung sogenannter Klebevliese denkbar. Für letzte werden zum Beispiel Wirr- und/oder Parallelvliese verwendet. Die Klebevliese sind bevorzugt extrudierte Klebevliese, insbesondere aus den Polymeren Polyamid, Polyesther, Polyolefin oder Polyurethan. Auch können entsprechende Copolymerisate verwendet werden. Insbesondere haben sich geschäumte extrudierte Klebevliese als geeignet erwiesen. Die Klebevliese weisen zweckmäßigerweise Flächenmassen zwischen 10 g/m² bis 100 g/m², vorzugsweise zwischen 15 g/m² und 80 g/m² auf. Schließlich ist auch ein Imprägnat denkbar, also ein mit einem Kunstharz imprägniertes Papier.

Gemäß einer weiteren Ausgestaltung des erfindungsgemäßen Verfahrens ist als Klebefolie eine bei ihrer Aktivierung schrumpfende Folie im Schichtaufbau vorgesehen. Auf diese Weise kann erreicht werden, dass sich die Klebefolie hin zu den Kontaktstellen zwischen Wabenstruktur und benachbarter Lage, insbesondere Decklage, bei Aktivierung verlagert. Dies ist dem Umstand zuzuschreiben, dass die aktivierbare Klebefolie zwischen Wabenstruktur und benachbarter Lage festgeklemmt ist, während sie sich im Wabenzwischenraum, der sogenannten Wabenkammer, frei bewegen kann. Dies führt dazu, dass der über die aktivierbare Klebefolie aufgebrachte Klebstoff zumindest überwiegend genau an die Kontaktstellen zwischen Wabenstruktur und benachbarter Lage gebracht wird. Durch diesen Effekt wird eine optimale Applikation des Klebemittels erreicht, was schon bei vergleichsweise geringem Klebstoffeintrag zu hohen Festigkeitswerten der nach dem Verfahren hergestellten Leichtbauplatten führt.

Darüber hinaus kann dieser Effekt durch gezielte Befeuchtung der Ränder der Wabenstege bei Anwendung von Mikrowellen oder kapazitiver Erwärmung zur Aktivierung der Klebefolie verstärkt werden. Durch die Befeuchtung wird genau an den Kontaktstellen zwischen Wabenstruktur und benachbarter Lage die höchste Temperatur erreicht, weshalb von hier ausgehend die Klebefolie zu schrumpfen beginnt und Material aus dem Bereich der angrenzenden Wabenkammer nachfließt.

Ein Vorteil des erfindungsgemäßen Herstellungsverfahrens ist, dass der Schichtaufbau bereits vor dem Verkleben hergestellt wird, wodurch nicht mehr das Risiko besteht, dass zu schnell aushärtender bzw. abbindender Klebstoff oder ein unvorhergesehener Stillstand der Fertigungsvorrichtung, insbesondere der Presse, zu einer fehlerhaften Verklebung oder Kalibrierung des Schichtaufbaus führt. Bevor also der Klebstoff seine endgültigen Klebeeigenschaften durch seine Aktivierung erhält, kann mit einfachen Mitteln zunächst einmal der gewünschte Schichtaufbau ohne das Risiko einer negativen Beeinflussung durch den Klebstoff hergestellt werden. Es ist daher auch ohne weiteres möglich, zum Herstellen des Schichtaufbaus mindestens eine weitere Decklage, vorzugsweise zwei Decklagen, und/oder mindestens eine weitere Klebefolie und/oder mindestens eine weitere Mittellage, die vorzugsweise ebenfalls eine Wabenstruktur aufweist, zu verwenden.

So ist als Schichtaufbau denkbar, eine Wabenstruktur zwischen zwei Decklagen anzuordnen, wobei zwischen jeder Decklage und der Wabenstruktur eine wie zuvor beschriebene Klebefolie angeordnet ist.

Es ist auch denkbar, mehrere Mittellagen oder mehrere Wabenstrukturen übereinander zu schichten, ggf. sogar mit einer dazwischen angeordneten Zwischenlage, bei der es sich um eine geschäumte Lage oder eine Platte aus einer sehr leichten Holzart geringer Dichte handeln kann, wobei zwischen den einzelnen Lagen ebenfalls eine Klebefolie der zuvor beschriebenen Art vorgesehen sein kann. Auch in diesem Fall kann die Leichtbauplatte zur Außenseite hin jeweils von einer Decklage abgeschlossen sein, die ebenfalls über eine solche Klebefolie mit dem übrigen Schichtaufbau verbunden sein kann.

Es ist auch denkbar, auf einer oder mehreren der Decklagen noch eine zusätzliche Beschichtung vorzusehen, die ebenfalls über eine solche Klebefolie an der Decklage fixiert werden kann.

Bei den zuvor beschriebenen Ausführungsformen eines Schichtaufbaus muss dabei nicht zwingend zwischen jedem Paar aus benachbarten Lagen die zuvor beschriebene aktivierbare Klebefolie vorgesehen sein. Auch andere Klebstoffe können im Bedarfsfall Anwendung finden, solange im Schichtaufbau zumindest eine der besagten Klebefolien vorgesehen ist.

Bei der genannten Beschichtung, die auf einer oder mehreren der Decklagen vorgesehen werden kann, kann es sich beispielsweise um eine Folie, einen Schichtstoff oder ein Furnier handeln.

Die durch das erfindungsgemäße Verfahren hergestellten Leichtbauplatten für den Möbelbau können als rahmenlose Platten hergestellt werden oder zumindest einen Riegel aufweisen. Im Falle einer rahmenlosen Platte kann der verklebte Schichtaufbau in einem nachfolgenden Verfahrensschritt mit einer Kante versehen werden. Im Falle der Verwendung eines oder mehrerer Riegel kann ein solcher an zumindest einer Kante und/oder innerhalb der Platte vorgesehen sein, wobei dieser Riegel bereits bei der Herstellung des Schichtaufbaus in diesen integriert werden kann. Auch ein solcher Riegel kann mittels der zuvor beschriebenen aktivierbaren Klebefolie mit den benachbarten Lagen, insbesondere einer Decklage, verbunden werden.

Bei den Decklagen handelt es sich vorzugsweise um Holzwerkstoffe wie Spanplatten, Faserplatten, OSB-Platten oder Sperrholz. Auch Schichtstoffe können als Decklagen verwendet werden. Das erfindungsgemäße Herstellungsverfahren kann auch bei Decklagen aus beliebigen anderen Materialien wie beispielsweise Kunststoff oder Metall angewendet werden. Eine Einschränkung besteht lediglich hinsichtlich der Verfügbarkeit einer aktivierbaren Klebefolie für das jeweilige Waben- bzw. Decklagenmaterial.

Die Wabenstruktur wird vorteilhafterweise von einer Pappwabe, beispielsweise einer Sechseck-Streckwabe oder Sinuswabe, gebildet. Es sind aber auch Wabenstrukturen aus anderen Materialien wie Metall, Kunststoff oder Dünnst-MDF denkbar. Als Lagen mit einer Wabenstruktur sind allgemein solche zu verstehen, deren Oberflächen aus den Kanten von Stegen gebildet werden, die vorzugsweise im Verhältnis zu dem Hohlraum, den sie umschließen, vergleichsweise dünn sind. In diesem Sinne wird unter einer Wabenstruktur beispielsweise auch eine gelochte Platte verstanden.

Gemäß noch einer weiteren Ausgestaltung des erfindungsgemäßen Herstellungsverfahrens wird das Aktivieren des Klebstoffs in einer Presse durchgeführt, beispielsweise in einer Doppelbandpresse. Das Aktivieren kann aber auch unmittelbar vor dem Einführen des Schichtaufbaus in die Presse erfolgen. Alternativ oder zusätzlich kann auch das Fixieren und/oder ein Kalibrieren des Schichtaufbaus in einer solchen Presse, vorzugsweise in derselben Presse wie die Aktivierung, durchgeführt werden. Zum Verfestigen des Klebstoffs kann der Schichtaufbau entweder aus dem Einflussbereich des elektromagnetischen Feldes entfernt werden oder das elektromagnetische Feld abgeschaltet werden.

Die Herstellung der Leichtbauplatte kann grundsätzlich durch eine diskontinuierliche Fertigung, eine kontinuierliche plattenweise Fertigung oder eine kontinuierliche endlose Fertigung erfolgen.

Bei der diskontinuierlichen Fertigung wird zunächst der Schichtaufbau mit dem entsprechend gewünschten Plattenmaß hergestellt, indem Decklage, Klebefolie und Wabenstruktur übereinander angeordnet werden. Optional wird auch ein Riegel an der Kante und/oder innerhalb des Schichtaufbaus vorgesehen. Anschließend wird die Klebefolie wie beschrieben aktiviert. Schließlich erfolgt das Einfahren in eine Taktpresse und das Schließen der Presse. Dabei erfolgt eine Kalibrierung, durch die die zu erreichende Dicke der fertigen Leichtbauplatte eingestellt wird. Bei Verwendung einer entsprechenden Presse kann auch die Aktivierung zumindest teilweise in der Presse bzw. beim Einfahren in die Presse erfolgen. Dabei ist es denkbar, in einer ersten Phase des Presszyklus die Klebefolie bzw. den Klebstoff zu aktivieren und in einer weiteren Phase die Fixierung und Abkühlung des Verbunds durchzuführen, wobei der Klebstoff abbindet bzw. aushärtet.

Die kontinuierliche plattenweise Fertigung entspricht im wesentlichen der diskontinuierlichen Fertigung, wobei jedoch die Aktivierung der Klebefolie in einer Vorrichtung erfolgt, die im Durchlauf arbeitet. Als Presse wird in diesem Fall eine kontinuierlich arbeitende Presse, beispielsweise genannte Doppelbandpresse, verwendet.

Bei der kontinuierlichen endlosen Fertigung werden die jeweilige Decklage, Klebefolie und Wabenstruktur in endloser Form, beispielsweise von Rollen, bereitgestellt und kontinuierlich geschichtet. Der auf diese Weise hergestellte Schichtaufbau wird dann in eine Vorrichtung weitertransportiert, die im Durchlauf die Klebefolie aktiviert. Anschließend wird der mit dem aktivierten Klebstoff versehene Schichtaufbau in eine kontinuierlich arbeitende Presse transportiert. Wie beschrieben kann die Aktivierung auch in der Presse erfolgen. Schließlich kann hinter der Presse mit Hilfe einer Säge die so hergestellte Platte in der jeweils gewünschten Länge abgeschnitten werden.

Es gibt nun eine Vielzahl von Möglichkeiten, das erfindungsgemäße Verfahren auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1: ein erstes Ausführungsbeispiel einer Leichtbauplatte
- Fig. 2: ein zweites Ausführungsbeispiel einer Leichtbauplatte
- Fig. 3: ein drittes Ausführungsbeispiel einer Leichtbauplatte
- Fig. 4: eine perspektivische Ansicht des Ausführungsbeispiels aus Fig. 1 nach dem Pressen,
- Fig. 5: ein Ablaufschema eines Ausführungsbeispiels des erfindungsgemäßen Verfahrens und
- Fig. 6: ein Ablaufschema eines weiteren Ausführungsbeispiels des erfindungsgemäßen Verfahrens.

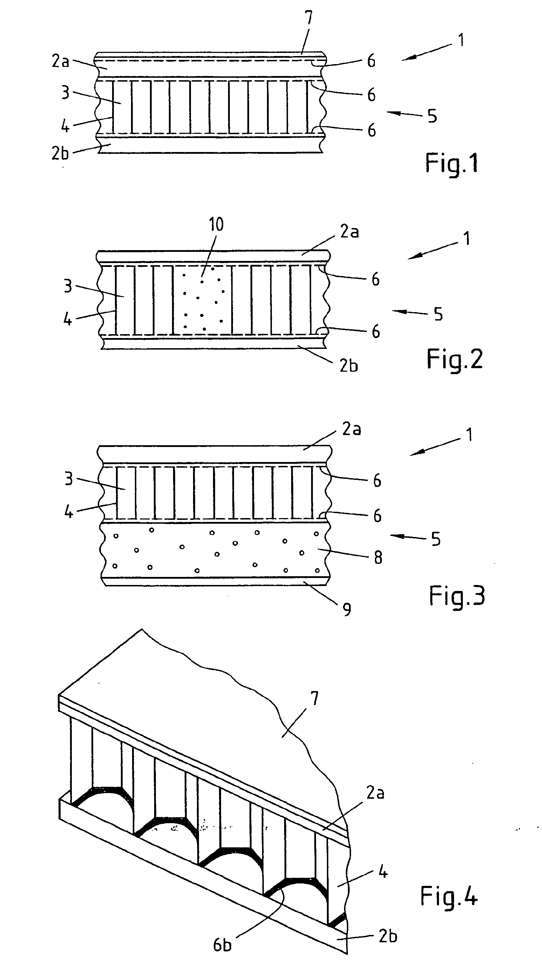

Fig. 1 zeigt eine Leichtbauplatte 1 für den Möbelbau mit einer oberen Decklage 2a und einer unteren Decklage 2b, zwischen denen eine Mittellage 3 mit einer Wabenstruktur 4 angeordnet ist. Auf der oberen Decklage 2a ist ferner eine Beschichtung 7 in Form eines Schichtstoffes vorgesehen.

Ferner sind zur Verbindung der zuvor beschriebenen jeweils benachbarten Lagen Klebefolien 6 vorgesehen, die einen Klebstoff 6a enthalten, der durch ein elektromagnetisches Feld aktivierbar und damit verflüssigbar ist. Zusammen bilden die einzelnen Lagen einen Schichtaufbau 5.

Der Schichtaufbau 5 ist in Fig. 1 vor dem Aktivieren des Klebstoffs bzw. der Klebefolie, bei der es sich um eine schrumpfende Folie handelt, dargestellt. Dies ist daran zu erkennen, dass die Klebefolie 6 auch im Bereich oberhalb bzw. unterhalb der Wabenkammern 4a durchgängig und in gleichmäßiger Stärke vorhanden ist. Fig. 4 zeigt im Vergleich dazu den Zustand, nachdem der Klebstoff 6a der Klebefolie 6 aktiviert worden ist und nachdem der Schichtaufbau 5 in einer Presse fixiert und kalibriert worden ist. Hierbei hat sich das Material der Klebefolie 6 hin zu den Kontaktstellen zwischen Wabenstruktur 4 und Decklagen 2a und 2b verlagert und bildet dort einen die Stege der Wabenstruktur 4 einbettenden Klebstoffwulst 6b.

Auch die Figuren 2 und 3 stellen einen Schichtaufbau 5 vor dem Aktivieren des Klebstoffs 6a der jeweiligen Klebefolie 6 dar.

Dabei zeigt Fig. 2 ein Ausführungsbeispiel, bei dem zwischen zwei Decklagen 2a und 2b eine Mittellage 3 mit einer Wabenstruktur 4 und mit einem Riegel 10 angeordnet ist. In diesem Fall ist sowohl die Wabenstruktur 4 als auch der Riegel 10 mit beiden Decklagen 2a und 2b jeweils mit einer aktivierbaren Klebefolie 6 verbunden.

In Fig. 3 ist ein weiterer Schichtaufbau 5 dargestellt. In diesem Fall ist ebenfalls eine Mittellage 3 mit einer Wabenstruktur 4 vorgesehen, die benachbart zu einer oberen Decklage 2a angeordnet ist, wobei zwischen Wabenstruktur 4 und Decklage 2a eine Klebefolie 6 der zuvor beschriebenen Art vorgesehen ist. Benachbart zu der Wabenstruktur 4 ist eine Zwischenlage 8 aus einem geschäumten Material vorgesehen, wobei zwischen Wabenstruktur 4 und Zwischenlage 8 ebenfalls eine Klebefolie 6 verläuft. Die Zwischenlage 8 ist an ihrer Unterseite schließlich mit einer Beschichtung 9 in Form eines Furniers versehen.

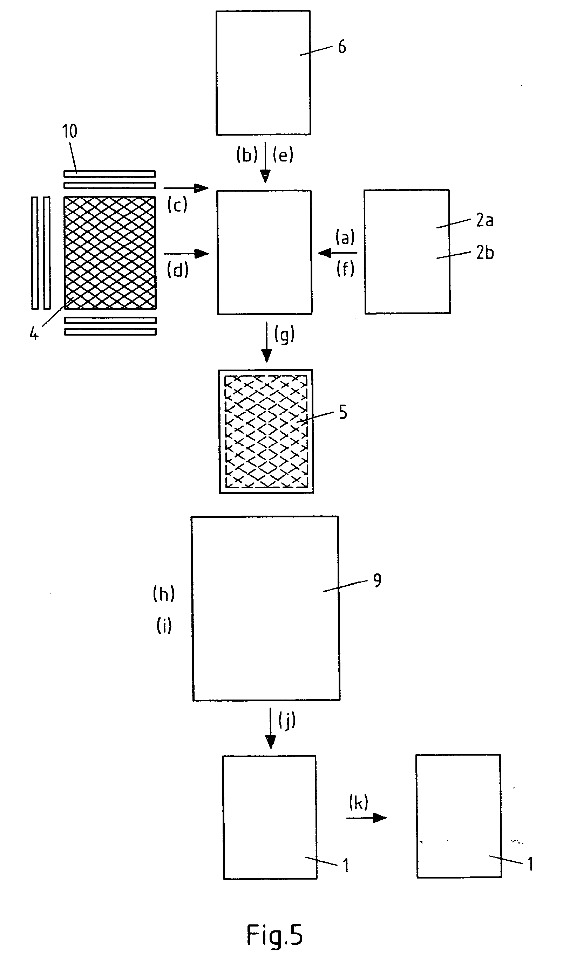

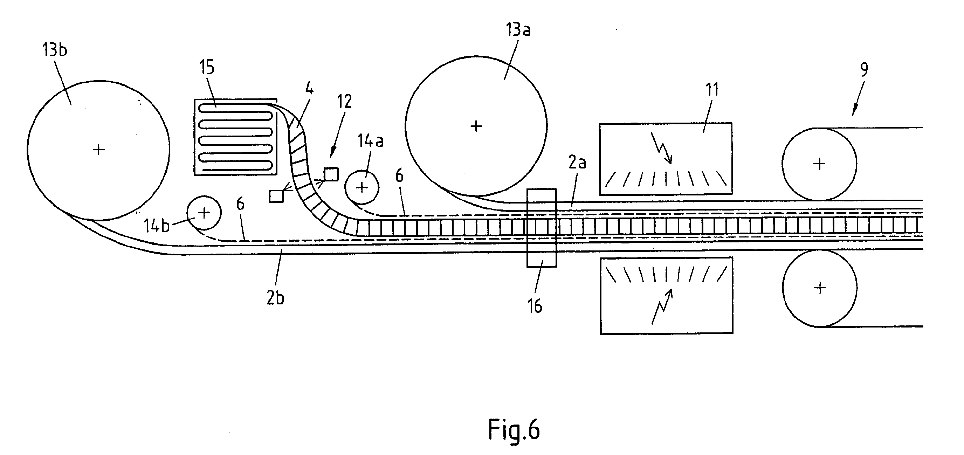

Die Figuren 5 und 6 zeigen zwei verschiedene
Ausführungsbeispiele eines Herstellungsverfahrens gemäß der vorliegenden Erfindung.

Das Ablaufschema in Fig. 5 zeigt eine diskontinuierliche Fertigung einer Leichtbauplatte 1 für den Möbelbau.

Dabei wird in Schritt (a) eine erste Decklage bereitgestellt, die später die untere Decklage 2b bildet. Im Schritt (b) wird eine wie zuvor beschriebene Klebefolie 6 auf der Decklage angeordnet. In einem weiteren Schritt (c) werden ein oder mehrere Riegel 10 auf der Klebefolie platziert. In einem weiteren Schritt (d) wird eine Wabenstruktur in Form einer Pappwabe zwischen den Riegeln 10 auf der Klebefolie 6 platziert. In noch einem weiteren Schritt (e) wird eine weitere Klebefolie 6 auf die aus Wabenstruktur 4 und Riegeln 10 gebildete Mittellage 3 gelegt. Schließlich kommt als abschließender Schritt zur Herstellung eines Schichtaufbaus 5 eine weitere Decklage auf die obere Klebefolie 6.

Der auf diese Weise hergestellte Schichtaufbau 5 wird anschließend in eine HF-Presse 9 transportiert, was den Schritt (g) bildet.

In der Presse 9 erfolgt zunächst in einem Schritt (h) das Aktivieren der Klebefolie, gemeint ist damit das Aktivieren zumindest des Klebstoffs der Klebefolie, also das Verflüssigen des Klebstoffs. Dazu wird der Schichtaufbau 5 einem elektromagnetischen Feld für einen vorbestimmten Zeitraum ausgesetzt.

Nachdem das elektromagnetische Feld wieder abgeschaltet worden ist, wird der Schichtaufbau 5 in Schritt (i) fixiert, wobei sich der Klebstoff 6a verfestigt, also abbindet bzw. aushärtet. Gleichzeitig mit dem Fixieren erfolgt auch ein Kalibrieren auf eine vorgegebene Dicke des Schichtaufbaus 5.

Schließlich erfolgt in Schritt (j) das Ausfahren aus der Presse 9 und in Schritt (k) das Abstapeln der fertigen Leichtbauplatte 1.

Fig. 6 zeigt schließlich schematisch die kontinuierliche Endlosfertigung, wobei die Aktivierung des Klebstoffs 6a in einer separaten Vorrichtung 11 vor der Presse 9, die hier als Doppelbandpresse ausgeführt ist, erfolgt.

Gemäß Fig. 6 werden die beiden Decklagen 2a und 2b sowie die beiden Klebefolien 6, welche zwischen Mittellage 3 und jeweiliger Decklage 2a bzw. 2b angeordnet werden, von Vorratsrollen 13a, 13b, 14a bzw. 14b abgerollt. Das Material der Wabenstruktur 4 liegt in einem mäanderförmig geschichteten Vorratsbehälter 15 in flacher Form vor und wird nach Entnahme gestreckt, wodurch die Wabenstruktur entsteht.

Die Wabenstruktur 4 wird, bevor sie zwischen die beiden Folien 6 geführt wird, noch in einer Befeuchtungseinrichtung 12 einer Befeuchtung unterzogen, hier durch Besprühen mit Wasser.

Der auf diese Weise kontinuierlich hergestellte Schichtaufbau 5 durchläuft anschließend zunächst Fixierungsmittel 16 zur horizontalen Ausrichtung der einzelnen Lagen des Schichtaufbaus 5 und dann Mittel 11, durch die der Klebstoff 6a der Klebefolien 6 mittels eines elektromagnetischen Feldes aktiviert bzw. verflüssigt wird.

Ein anschließendes Verfestigen des Klebstoffs 6a erfolgt unter gleichzeitiger Kalibrierung der Dicke des Schichtaufbaus 5 in einer als Doppelbandpresse ausgeführten Presse 9, wobei sich der Klebstoff 6a hier wieder verfestigt.

## Patentansprüche

1. Verfahren zur Herstellung einer Leichtbauplatte (1) für den Möbelbau, die mindestens eine Decklage (2a,2b) und eine damit zu verklebende Mittellage (3) mit einer Wabenstruktur (4) aufweist, bei dem die folgenden Schritte durchgeführt werden:
- Herstellen eines Schichtaufbaus (5) aus mindestens einer Holzwerkstoffplatte als Decklage (2a,2b), der Mittellage (3) und einer Klebstoff (6a) enthaltenden und bei ihrer Aktivierung schrumpfenden Klebefolie (6), wobei die Klebefolie (6) zwischen jeweiliger Decklage (2a;2b) und Mittellage (4) angeordnet wird,
- Erzeugen eines elektromagnetischen Feldes, wobei der Schichtaufbau (5) dem elektromagnetischen Feld ausgesetzt wird,
- Fixieren des Schichtaufbaus (5), wobei sich der Klebstoff (6a) zumindest teilweise verfestigt.

2. Verfahren nach Anspruch 1, **dadurch gekennzeichnet, dass** der Schichtaufbau (5) einem elektromagnetischen Wechselfeld ausgesetzt wird.

3. Verfahren nach Anspruch 2, **dadurch gekennzeichnet, dass** der Schichtaufbau (5) einem elektromagnetischen Wechselfeld einer Frequenz von 300 MHz bis 300 GHz ausgesetzt wird.

4. Verfahren nach Anspruch 2 oder 3, **dadurch gekennzeichnet, dass** der Schichtaufbau (5) einem elektromagnetischen Wechselfeld einer Frequenz von 30 kHz bis 300 MHz ausgesetzt wird.

5. Verfahren nach einem der Ansprüche 2 bis 4, **dadurch gekennzeichnet, dass** der Schichtaufbau (5) einem magnetischen Wechselfeld einer Frequenz von 3 kHz bis 30 kHz ausgesetzt wird.

6. Verfahren nach einem der Ansprüche 1 bis 5, **dadurch gekennzeichnet, dass** der Klebstoff (6a) von dem elektromagnetischen Feld direkt oder indirekt aktiviert wird.

7. Verfahren nach einem der Ansprüche 1 bis 6, **dadurch gekennzeichnet, dass** die Klebefolie (6) und/oder eine benachbarte Lage (2a,2b,3,7,8), insbesondere vor dem Herstellen des Schichtaufbaus (5), befeuchtet, vorzugsweise mit Wasser benetzt, wird.

8. Verfahren nach einem der Ansprüche 1 bis 7, **dadurch gekennzeichnet, dass** die Klebefolie (6) und/oder eine benachbarte Lage (2a,2b,3,7,8), insbesondere vor dem Herstellen des Schichtaufbaus (5), mit Metallpartikeln und/oder einer Metall enthaltenden Schicht versehen wird.

9. Verfahren nach einem der Ansprüche 1 bis 8, **dadurch gekennzeichnet, dass** die Klebefolie (6) eine Heiß- oder Schmelzklebefolie oder eine mit Heiß- oder Schmelzkleber kaschierte Folie oder ein Klebevlies oder ein Imprägnat ist.

10. Verfahren nach einem der Ansprüche 1 bis 9, **dadurch gekennzeichnet, dass** zum Herstellen des Schichtaufbaus (5) mindestens eine weitere Decklage (2b) und/oder mindestens eine weitere Klebefolie (6) und/oder mindestens eine weitere Mittellage (8) verwendet wird.

11. Verfahren nach Anspruch 10, **dadurch gekennzeichnet, dass** mindestens eine der Decklagen (2a) mit einer Beschichtung (7) versehen wird, wobei eine der Klebefolien (6) zwischen der Decklage (2a) und der Beschichtung (7) angeordnet wird.

12. Verfahren nach einem der Ansprüche 1 bis 11, **dadurch gekennzeichnet, dass** das Aktivieren des Klebstoffs (6a) und/oder das Fixieren und/oder ein Kalibrieren des Schichtaufbaus (5) in einer Presse (9) durchgeführt wird.

## Claims

1. Method for producing a lightweight board (1) for furniture construction, which comprises at least one top layer (2a, 2b) and a central layer (3) to be bonded thereto comprising a honeycomb structure (4), in which the following steps are carried out:
- producing a layered structure (5) consisting of at least one wood-based material panel as the top layer (2a, 2b), the central layer (3) and an adhesive film (6) which contains adhesive (6a) and which shrinks when said adhesive is activated, the adhesive film (6) being arranged between the respective top layer (2a; 2b) and the central layer (4),
- generating an electromagnetic field, the layered construction (5) being subjected to the electromagnetic field,
- fixing the layered construction (5), the adhesive (6a) being at least partially hardened.

2. Method according to Claim 1, **characterised in that** the layered construction (5) is subjected to an electromagnetic alternating field.

3. Method according to Claim 2, **characterised in that** the layered construction (5) is subjected to an electromagnetic alternating field at a frequency of 300 MHz to 300 GHz.

4. Method according to Claim 2 or 3, **characterised in that** the layered construction (5) is subjected to an electromagnetic alternating field at a frequency of 30 kHz to 300 MHz.

5. Method according to one of Claims 2 to 4, **characterised in that** the layered construction (5) is subjected to a magnetic alternating field at a frequency of 3 kHz to 30 kHz.

6. Method according to one of Claims 1 to 5, **characterised in that** the adhesive (6a) is directly or indirectly activated by the electromagnetic field.

7. Method according to one of Claims 1 to 6, **characterised in that** the adhesive film (6) and/or an adjacent layer (2a, 2b, 3, 7, 8) is moistened, preferably wetted with water, in particular before producing the layered construction (5).

8. Method according to one of Claims 1 to 7, **characterised in that** the adhesive film (6) and/or an adjacent layer (2a, 2b, 3, 7, 8) is provided with metal particles and/or a layer containing metal, in particular before producing the layered construction (5).

9. Method according to one of Claims 1 to 8, **characterised in that** the adhesive film (6) is a hot melt adhesive film or a film laminated by hot melt adhesive or an adhesive nonwoven fabric or an impregnate.

10. Method according to one of Claims 1 to 9, **characterised in that** for producing the layered construction (5) at least one further top layer (2b) and/or at least one further adhesive film (6) and/or at least one further central layer (8) is used.

11. Method according to Claim 10, **characterised in that** at least one of the top layers (2a) is provided with a coating (7), one of the adhesive films (6) being arranged between the top layer (2a) and the coating (7).

12. Method according to one of Claims 1 to 11, **characterised in that** the activation of the adhesive (6a) and/or the fixing and/or a calibration of the layered construction (5) is carried out in a press (9).

## Revendications

1. Procédé pour produire un panneau alvéolaire (1) pour la fabrication de meubles, qui présente au moins une couche de revêtement (2a, 2b) et une couche centrale (3) à coller avec la couche de revêtement et présentant une structure de nid d'abeilles (4), dans lequel les étapes suivantes sont mises en oeuvre :
- fabrication d'une structure de couche (5) comprenant au moins un produit dérivé du bois en forme de plaque comme couche de revêtement (2a, 2b), la couche centrale (3) et un film adhésif (6) contenant de la colle (6a) et se rétractant lors de son activation, le film adhésif (6) étant disposé entre la couche de revêtement (2a ; 2b) respective et la couche centrale (4),
- génération d'un champ électromagnétique, la structure de couche (5) étant exposée au champ électromagnétique,
- fixation de la structure de couche (5), la colle (6a) se consolidant au moins partiellement.

2. Procédé selon la revendication 1, **caractérisé en ce que** la structure de couche (5) est exposée à un champ alternatif électromagnétique.

3. Procédé selon la revendication 2, **caractérisé en ce que** la structure de couche (5) est exposée à un champ alternatif électromagnétique d'une fréquence de 300 MHz à 300 GHz.

4. Procédé selon la revendication 2 ou 3, **caractérisé en ce que** la structure de couche (5) est exposée à un champ alternatif électromagnétique d'une fréquence de 30 kHz à 300 MHz.

5. Procédé selon l'une des revendications 2 à 4, **caractérisé en ce que** la structure de couche (5) est exposée à un champ alternatif magnétique d'une fréquence de 3 kHz à 30 kHz.

6. Procédé selon l'une des revendications 1 à 5, **caractérisé en ce que** la colle (6a) est activée directement ou indirectement par le champ électromagnétique.

7. Procédé selon l'une des revendications 1 à 6, **caractérisé en ce que** le film adhésif (6) et/ou une couche voisine (2a, 2b, 3, 7, 8) est humidifié, de préférence humecté avec de l'eau, en particulier avant la fabrication de la structure de couche (5).

8. Procédé selon l'une des revendications 1 à 7, **caractérisé en ce que** le film adhésif (6) et/ou une couche voisine (2a, 2b, 3, 7, 8) est doté de particules de métal et/ou d'une couche contenant du métal, en particulier avant la fabrication de la structure de couche (5).

9. Procédé selon l'une des revendications 1 à 8, **caractérisé en ce que** le film adhésif (6) est un film de colle thermofusible ou un film contrecollé avec de la colle thermofusible ou un non-tissé adhésif ou un produit imprégné.

10. Procédé selon l'une des revendications 1 à 9, **caractérisé en ce que**, pour la fabrication de la structure de couche (5), on utilise au moins une autre couche de recouvrement (2b) et/ou au moins un autre film adhésif (6) et/ou au moins une autre couche centrale (8).

11. Procédé selon la revendication 10, **caractérisé en ce qu'**au moins l'une des couches de revêtement (2a) est dotée d'un revêtement (7), l'un des films adhésifs (6) étant disposé entre la couche de recouvrement (2a) et le revêtement (7).

12. Procédé selon l'une des revendications 1 à 11, **caractérisé en ce que** l'activation de la colle (6a) et/ou la fixation et/ou un calibrage de la structure de couche (5) est effectué dans une presse (9).
